# EUROPÄISCHE PATENTANMELDUNG

(11) **EP 1 671 855 A1**
(43) Veröffentlichungstag der Anmeldung: **21.06.2006**
(21) Anmeldenummer: 05026832.5
(22) Anmeldetag: 08.12.2005
(51) Int. Cl.: B60R 21/239

(54) **Gassackmodul mit Abströmöffnung**

(30) Priorität: 16.12.2004 DE 202004019447 U
(71) Anmelder: TRW Automotive Safety Systems GmbH, 63743 Aschaffenburg (DE)
(72) Erfinder: Heist, Helga, 63846 Laufach (DE); Kreuzer, Martin, 63839 Kleinwallstadt (DE); Keutz, Markus, 64839 Rossdorf (DE); Lehmann, Michael, 63739 Aschaffenburg (DE); Fellhauer, Joachim, 63741 Nilkheim (DE); Haese, Lutz, 63739 Aschaffenburg (DE); Schneider, Michael Dr., 63834 Sulzbach (DE); Deckenhoff, Michael, 48249 Dülmen (DE); Helmstetter, Matthias, 63743 Aschaffenburg (DE); Freudenberger, Klaus, 63743 Aschaffenburg (DE); Britz, Thomas Dr., 63856 Bessenbach (DE); Magoley, Marcus Dr., 63739 Aschaffenburg (DE)
(74) Vertreter: Strass, Jürgen

(57) **Zusammenfassung**

Ein Gassackmodul für eine Fahrzeuginsassen-Rückhaltevorrichtung hat eine in einem festen Bauteil (16) des Gassackmoduls gebildete Abströmöffnung (14), durch die Gas abströmen kann. An der Abströmöffnung (14) ist ein Steuerelement (10) angebracht. Das Steuerelement (10) nimmt bei geringer Druckeinwirkung einen aufgerollten Zustand und bei größerer Druckeinwirkung einen abgerollten Zustand ein.

## Beschreibung

Die Erfindung betrifft ein Gassackmodul für eine Fahrzeuginsassen-Rückhaltevorrichtung mit einer in einem festen Bauteil des Gassackmoduls gebildeten Abströmöffnung, durch die Gas entweichen kann.

Grundsätzlich soll bei einem Gassackmodul der Gassack mit dem vom Gasgenerator erzeugten Gas möglichst schnell befüllt werden. In bestimmten Fällen ist es allerdings wünschenswert, die Gasmenge bzw. den Innendruck im Gassack an besondere Bedingungen anzupassen. Zu diesem Zweck können im Gassack selbst oder in festen Bauteilen des Gassackmoduls freigebbare Abströmöffnungen vorgesehen sein.

Aus der US 2004/0 051 285 A1 ist beispielsweise ein Gassackmodul mit Ventilklappen bekannt, die in einem Gasgeneratorträger gebildete Abströmöffnungen verschließen bzw. freigeben können. Die Ventilklappen sind mittels Fangbändern mit einem dem Fahrzeuginsassen zugewandten Teil des Gassackgewebes verbunden. Die Ventilklappen befinden sich bei Aktivierung des Gassackmoduls zunächst in der Öffnungsstellung, so daß Gas entweichen kann. Tritt der sich entfaltende Gassack sehr früh in Kontakt mit dem Fahrzeuginsassen, bleiben die Abströmöffnungen offen. Dadurch wird der Druck des sich entfaltenden Gassacks und damit die auf den Fahrzeuginsassen ausgeübte Kraft reduziert. Befindet sich der Fahrzeuginsasse dagegen in einer Position, die weiter vom Gassackmodul entfernt ist, werden die Abströmöffnungen im Verlauf der weiteren Entfaltung mittels der Fangbänder gegen den Innendruck des Gassacks verschlossen, so daß kein Gas mehr abströmen kann. In der US 2004/0 051 285 A1 ist auch ein anderes Konzept erwähnt, gemäß dem die Ventilklappen zunächst geschlossen sind und sich erst bei zunehmendem Gassackinnendruck öffnen.

Die Erfindung schafft ein Gassackmodul mit einer Abströmöffnung, deren effektiver Querschnitt sich mit einfachen Mitteln selbst reguliert.

Das erfindungsgemäße Gassackmodul für eine Fahrzeuginsassen-Rückhaltevorrichtung umfaßt eine in einem festen Bauteil des Gassackmoduls gebildete Abströmöffnung, durch die Gas abströmen kann, und ist dadurch gekennzeichnet, daß an der Abströmöffnung ein Steuerelement angebracht ist, das bei geringer Druckeinwirkung einen aufgerollten Zustand und bei größerer Druckeinwirkung einen abgerollten Zustand einnimmt.

Das erfindungsgemäß vorgesehene Steuerelement ermöglicht auf einfache Weise eine automatische Anpassung der abströmenden Gasmenge in Abhängigkeit des im Gassack herrschenden Innendrucks.

Vorzugsweise ist das Steuerelement so ausgebildet, daß es sich durch Federkraft selbsttätig aufrollt.

Das Steuerelement kann nach Art einer Faschingströte einen schlauchartigen Körper umfassen, der sich durch Einblasen von Gas mit einem bestimmten Mindestdruck abrollt.

Gemäß einem ersten Konzept der Erfindung soll sich der effektive Abströmquerschnitt mit steigendem Gassackinnendruck erhöhen. Dies kann durch Anbringen des schlauchartigen Körpers mit einem Ende am Rand der Abströmöffnung erreicht werden.

Gemäß einem zweiten Konzept der Erfindung soll sich der effektive Abströmquerschnitt mit steigendem Gassackinnendruck verringern. Dies kann dadurch erreicht werden, daß das Steuerelement neben der Abströmöffnung so angebracht ist, daß es im abgerollten Zustand wenigstens für eine teilweise Abdeckung der Abströmöffnung sorgt.

Die Erfindung wird nachfolgend anhand zweier Ausführungsbeispiele unter Bezugnahme auf die beigefügten Zeichnungen beschrieben. In den Zeichnungen zeigen:
- Figur 1 ein Aufrollelement für ein erfindungsgemäßes Gassackmodul;
- Figur 2 eine erste Ausführungsform der Erfindung; und
- Figur 3 eine zweite Ausführungsform der Erfindung.

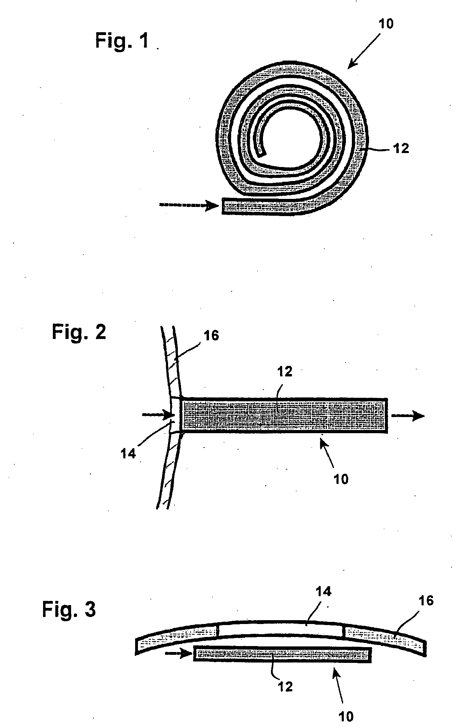

Figur 1 zeigt ein Steuerelement 10, das bezüglich seiner Funktionsweise mit einer Faschingströte vergleichbar ist. Das Steuerelement 10 besteht im wesentlichen aus einem an beiden Enden offenen schlauchartigen Körper 12. Das Steuerelement 10 rollt sich durch Federkraft automatisch spiralförmig auf, so daß es im Normalzustand, d.h. ohne besondere Druckeinwirkung, die in Figur 1 gezeigte Gestalt annimmt.

Durch Einblasen von Luft (oder einem anderen Gas) mit einem bestimmten Mindestdruck rollt sich das Steuerelement ab und nimmt die in den Figuren 2 und 3 gezeigte langgestreckte Gestalt an. Bei geringerem Druck verbleibt zumindest ein Teil des Steuerelements im aufgerollten Zustand und es kann gar kein Gas oder nur wenig Gas durch das Steuerelement 10 durchströmen.

In Figur 2 ist eine erste Ausführungsform der Erfindung dargestellt. Das Steuerelement 10, das hier im abgerollten Zustand gezeigt ist, ist mit einem Ende des schlauchartigen Körpers 12 am Rand einer Abströmöffnung 14 angebracht. Die Abströmöffnung 14 selbst ist in einem festen Bauteil 16 eines nicht näher dargestellten Gassackmoduls gebildet, z.B. in einem Gasgeneratorträger oder in einer Wand eines Modulgehäuses. Bei Überschreiten eines vorbestimmten Gassackinnendrucks, was unter bestimmten Umständen vorkommen kann, rollt sich das Steuerelement 10 ab, und es kann Gas durch den schlauchartigen Körper 12 entweichen.

Fällt der Druck zu einem späteren Zeitpunkt wieder unter den kritischen Wert, rollt sich das Steuerelement wieder auf, so daß der Abströmvorgang wieder gestoppt wird. Somit stellt sich der effektive Querschnitt der Abströmöffnung 14 automatisch in Abhängigkeit des Gassackinnendrucks ein.

Genau die umgekehrte Wirkung wird mit der in Figur 3 dargestellten Ausführungsform erreicht. Hier ist das Steuerelement 10 so auf der Innenseite neben der Abströmöffnung 14 angebracht, daß im aufgerollten Zustand des Steuerelements 10 die Abströmöffnung 14 freigegeben ist. Das im aufgerollten Zustand außenseitige Ende des schlauchartigen Körpers 12 ist dem einströmenden Gas zugewandt, so daß sich das Steuerelement 10 bei höherem Druck abrollt und die Abströmöffnung 14 direkt oder indirekt wenigstens teilweise verschließt, wie in Figur 3 gezeigt.

Das Abströmverhalten kann bei beiden Ausführungsformen insbesondere durch die Wahl des Querschnitts des schlauchartigen Körpers 12 des Steuerelements 10, der sich auch von einem Ende zum anderen verjüngen kann, beeinflußt werden.

## Patentansprüche

1. Gassackmodul für eine Fahrzeuginsassen-Rückhaltevorrichtung mit einer in einem festen Bauteil (16) des Gassackmoduls gebildeten Abströmöffnung (14), durch die Gas abströmen kann, **dadurch gekennzeichnet, daß** an der Abströmöffnung (14) ein Steuerelement (10) angebracht ist, das bei geringer Druckeinwirkung einen aufgerollten Zustand und bei größerer Druckeinwirkung einen abgerollten Zustand einnimmt.

2. Gassackmodul nach Anspruch 1, **dadurch gekennzeichnet, daß** sich das Steuerelement durch Federkraft selbsttätig aufrollt.

3. Gassackmodul nach Anspruch 1 oder 2, **dadurch gekennzeichnet, daß** das Steuerelement einen schlauchartigen Körper (12) umfaßt, der sich durch Einblasen von Gas mit einem bestimmten Mindestdruck abrollt.

4. Gassackmodul nach Anspruch 3, **dadurch gekennzeichnet, daß** der schlauchartige Körper (12) mit einem Ende am Rand der Abströmöffnung (14) angebracht ist.

5. Gassackmodul nach einem der Ansprüche 1 bis 3, **dadurch gekennzeichnet, daß** das Steuerelement (10) neben der Abströmöffnung (14) so angebracht ist, daß es im abgerollten Zustand wenigstens für eine teilweise Abdeckung der Abströmöffnung (14) sorgt.
